# EUROPEAN PATENT SPECIFICATION

(11) **EP 2 163 320 B1**
(45) Date of publication and mention of the grant of the patent: **19.08.2015**
(21) Application number: 08016212.6
(22) Date of filing: 15.09.2008
(51) Int. Cl.: B09C 1/00, B09C 1/08, C02F 1/28, E02B 3/12, E02D 31/00, C02F 1/00, E02D 29/02, C02F 103/00, C02F 1/42, C02F 1/52, C02F 3/00

(54) **Contaminant-reactive gabion/geocomposite article and method of manufacture**
Gabion-/Geokompositartikel mit reaktiver Füllung und Verfahren zur Herstellung
Article de gabion/géocomposite à réactif contaminé et son procédé de fabrication

(43) Date of publication of application: 17.03.2010
(73) Proprietor: Amcol International Corporation, Arlington Heights IL 60004 (US)
(72) Inventor: Olsta, James T., Bartlett, Illinois 60103 (US); Hornaday, Charles J., Arlington Heights, Illinois 60004 (US)
(74) Representative: Adam, Holger

(56) References cited:
- EP-A- 0 606 700
- EP-A- 1 256 391
- US-A- 5 472 297
- US-A- 5 882 453
- US-A- 5 911 539
- US-A1- 2005 103 707
- US-B1- 6 379 543

## Description

### FIELD OF THE INVENTION

The present invention is directed to reactive gabion/geocomposite articles for controlling or preventing the further spread of contaminants in soil, sediment or water. More particularly, the reactive gabion/geocomposite articles described herein include a reactive core geocomposite mat in contact with a gabion cage or grid, wherein the geocomposite mat contains a powdered or granular reactive material, such as activated carbon, coke breeze, peat moss, polymeric ion exchange resins, polymeric adsorbing resins; zero-valent iron, magnetite, apatite, organophilic clay, zeolite, diatomaceous earth; contaminant-degrading microbes; or mixtures thereof. The geocomposite mat is liquid-permeable and is in contact with an upper gabion cage or grid that is weighted, e.g., with rock or the like, before, after or during positioning. In another embodiment, a flexible gabion cage or grid is wrapped around the reactive geocomposite, to sandwich the reactive geocomposite within a folded gabion cage or grid, thereby covering the upper and lower major surfaces of the reactive geocomposite with the gabion cage or grid. In all embodiments that incorporate a reactive geocomposite mat, the mat may be secured to the weighted gabion cage or grid mechanically, by heat bonding, or adhesively, or simply held under the weighted gabion cage or grid without mechanical fastening, heat bonding, or adhesive fastening.

### BACKGROUND AND PRIOR ART

In-situ capping of underwater contaminants involves the placing of a subaqueous cover over contaminated sediments to stabilize sediments, minimize their re-suspension and transport, and reduce dissolved contaminant transport into surface waters.

In past applications, in-situ capping has typically been constructed with either, a) loosely placed clean sediment, silt and sand; b) bulk reactive material such as organoclay, or c) a low permeability liner such as geomembrane or geosynthetic clay liner; or d) reactive geocomposite mat.

Disadvantages of loosely placed clean sediment, silt or sand are: low carbon content requires relatively thick cap; the material may segregate upon settling resulting in stratified layers; benthic organisms may burrow into the material.

Disadvantages of bulk reactive material are: the angle of repose requires material on the sides beyond the area of concern, and difficulty in placing the material through water.

A disadvantage of low permeability liners is that they may be subject to uplift from gases generated by the sediment below the liner.

The prior art is replete with methods and articles used to confine or store a wide variety of environmental contaminants ranging from completely capping, in-situ, contaminated sediments that are left in-place in underwater environments; terrestrial landfills wherein dredged or otherwise collected contaminated sediments are placed within an engineered disposal site surrounded with an impervious liner system and capped with an impervious material; and the use of a reactive mat and/or reactive backfill that surrounds the contaminated material. Examples of reactive geocomposites and mats are found in U.S. Patent 6,284,681 B1 ('681) and published application US 2002/0151241 A1 ('241). The reactive geocomposites described in these two publications include one or more layers of reactive material each surrounded by outer geotextiles that allow contaminated liquid to pass through the reactive layer for sorption or reaction of the contaminants with a reactive material contained between the outer geotextile layers, and in the case of the '241 published application, the geocomposite may be deployed vertically. As a further example of the relevant prior art document US 6379543-B1 is known.

One of the major problems encountered with the use of reactive mats for controlling or confining contaminated materials, or in controlling or preventing leaching of contaminants from sediments and preventing the contaminants from entering ground water supplies, and particularly from ground water traversing upwardly through a lake or ocean soil interface into the lake or ocean, is in the ability to provide a transportable, integral mat having a sufficient volume or thickness of reactive material so that the mat provides very long term protection without the necessity of periodic replacement. The reactive mats described in the '681 patent and in the '241 publication provide alternating layers of geotextile/reactive material/geotextile/reactive material since a sufficient thickness of reactive material cannot be provided in a single reactive material core layer without that reactive material being lost during transportation or installation. The mat disclosed in U.S. 7,128,498 does not have adjacent layers interconnected but relies upon a rock covering layer to maintain the mat in position. The mat disclosed in the '498 patent has separate layers that are not structurally interconnected and may easily separate due to the powerful hydraulic force experienced with lake and river ground water supplies. Also, deployment of separate geotextiles and reactive materials through a water column is difficult.

This assignee's U.S. Patent Nos. 5,237,945 ('945) and 5,389,166 ('166) describe the manufacture of a water barrier formed from a clay-fiber mat that may include a powdered or granular bentonite clay, a powdered or granular liquid-interacting material, e.g., a contaminant-reactant, or providing the contaminant-reactant as a separate layer in the water barrier product. The water barrier mat formed in accordance with the '945 and '166 patents is manufactured by laying down geosynthetic fibers and the water swellable clay, with or without the contaminant-reactant material, simultaneously. In this manner, a geosynthetic composite material can be manufactured wherein the geosynthetic fibers are surrounded by the water-swellable clay, with or without the contaminant-reactant material, in initially forming a relatively thick geotextile that essentially prevents water flow-through (maximum water-permeability of 1 x 10⁻⁷ cm/sec.). Such a mat must be subsequently consolidated and the fibers must be substantially densified after the initial formation of the mixture of powdered or granular material and fibers in an attempt to secure the fibers in position surrounding the powdered or granular material.

### SUMMARY

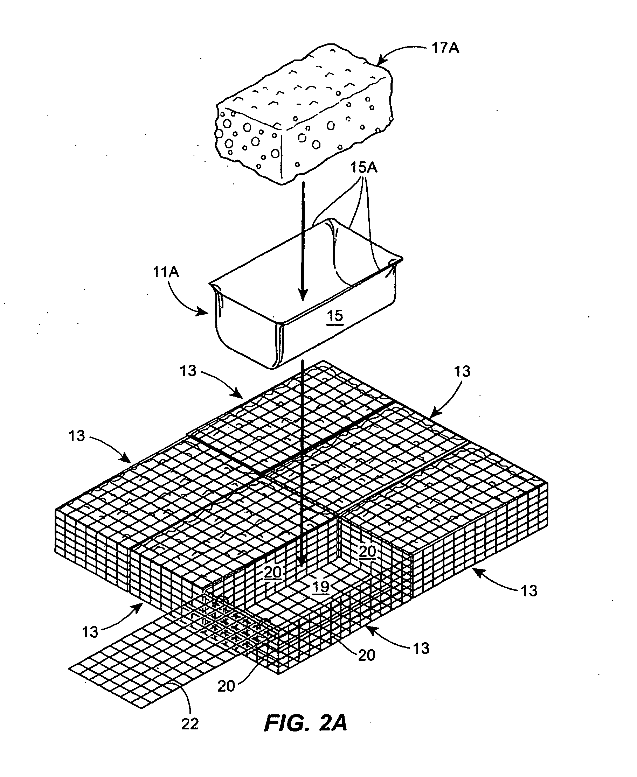

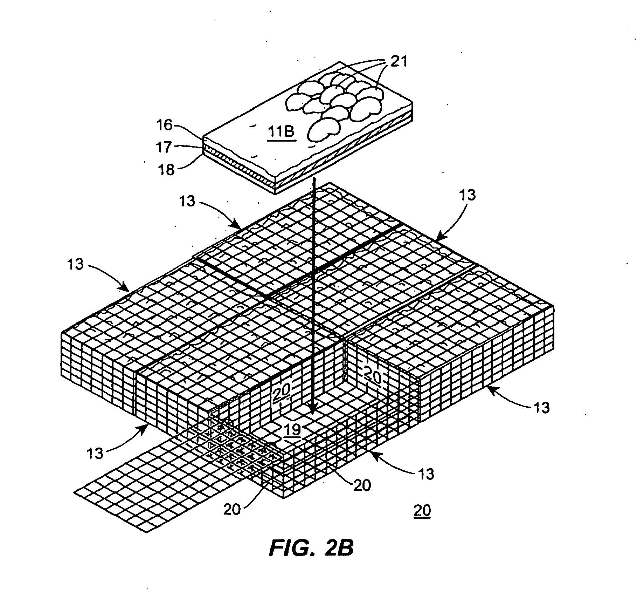

In brief, described herein are reactive gabion/geocomposite articles, and their methods of manufacture, for controlling contaminants in soil or water that allow the passage of essentially non-contaminated water therethrough. The articles and methods described herein utilize gabions, which are box shaped cages or grids (see Fig. 2) made of either steel wire mesh or plastic. In one embodiment, the reactive geotextile mats are lined on the top major surface with a gabion cage or grid. In other embodiments, the cages or grids surround a geocomposite containing reactive material. The typical thickness (height) of the gabion grids is 5.08 to 91.4 cm (2 inches to 3 feet). The gabion/geocomposite articles can be constructed in-situ (at the site of deployment) or remotely (on land or barge) and set in place. They are typically placed side-by-side and, in a preferred embodiment, are configured to cover a target sediment area, underwater. The gabion/geocomposite articles are heavy enough to sink and hold the geotextile in place or may be covered or at least partially filled with clean sediment, silt, sand and/or concrete block or rock to hold the reactive geocomposite mat in place and for armoring.

Advantages of Reactive Gabion/Geocomposite Articles
1. Higher reactivity and/or adsorption of reactive material on a unit thickness basis allows for thinner cap thickness than clean sediment, silt and sand.
2. A gabion has several advantages over loose placement of reactive or adsorptive materials, including:
   a. The outer walls or edges of the reactive geocomposite mat may be made water-impermeable, e.g., using an impermeable geomembrane, to prevent water from traveling horizontally and out of the gabion/geocomposite article without complete treatment by the reactive material;
   b. more uniform thickness and mass per unit area placement of reactive or adsorptive material;
   c. ability to conduct thickness and mass per unit area quality control/quality assurance prior to placement;
   d. ability to mix reactive or adsorptive materials in defined proportions;
   e. geotextiles provide separation of the reactive material from the contaminated sediment and cover material:
   f. geotextiles provide resistance to biointrusion;
   g. geosynthetic reinforcement provides resistance to uplift and separation of reactive/adsorptive materials from gas migration; and
   h. geosynthetic reinforcement provides increased stability on slopes.

A second embodiment is a two-step system with a reactive geosynthetic mat or geosynthetic clay liner mat containing reactive material overlain by a rock-filled gabion.
Advantages of reactive gabion/geocomposite mat system:
1. Mat provides complete coverage;
2. gabion allows consolidation; and
3. gabion/mat will not be displaced by gas uplift or scour.

According to one embodiment of the invention a liquid-permeable reactive geocomposite mat, or reactive material-containing geocomposite mat, such as disclosed in this assignee's U.S. Patent Application US 2007/0059542 A1 containing one or more reactive materials, is disposed under a lower major surface of a rock filled or partially filled gabion. The weighted gabion cage or grid prevents the reactive geosynthetic mat from movement from its position during use, transportation, installation, and deployment.

Suitable powdered or granular contaminant-reactive materials include organophilic clay, activated carbon, coke breeze, zero-valent iron, magnetite, apatite, zeolite, peat moss, polymeric ion exchange resins, polymeric adsorbents, contaminant-degrading microbes and mixtures thereof. The geocomposite mat can be inoculated with microbes or microorganisms and optionally, a food supply for the microorganisms, as disclosed in application US 2006/0000767 A1. Any water-permeable geosynthetic sheets or fabrics may be used to form the reactive geocomposite articles, such as polyolefins, e.g., polypropylene, polyethylene and copolymers thereof; rayon; polyesters; nylon; acrylic polymers and copolymers; polyamides; polyamide copolymers; polyurethanes, and the like.

The method of manufacture permits the manufacture of a reactive gabion/ geocomposite article that includes a contaminant-reactant material that is structurally secure, without lateral movement, and contains contaminant-reactant material that maintains its uniform disposition throughout the reactive geocomposite mat.

A powdered or granular water-swellable clay material can be applied in a relatively high concentration at or near the edges of the reactive geocomposite mats, adjacent to one or both major surfaces to permit the water-swellable clay to extrude through the edges of the gabions, thereby creating a sealing layer for sealing seams between adjacent reactive gabion/geocomposite articles.

Accordingly, one aspect of the contaminant-reactive gabion/geocomposite articles described herein is to provide a new and improved water-permeable article of manufacture and method of making the article by incorporating a powdered or granular contaminant-reactant material into a gabion cage containment structure, e.g., a reactive geocomposite mat, wherein the reactive material is encased within or between one or more water-permeable geotextile sheets or fabrics, and the composite is held in position within or below a weighted gabion grid or cage.

A further aspect of the gabion/geocomposite articles described herein is to provide a new and improved article of manufacture including a powdered or granular contaminant-reactant or contaminant-interacting material contained in a reactive geocomposite article that is contained within or below a weighted gabion grid or cage structure, whereirrthe contaminant-reactive material is selected from the group consisting of an organophilic clay, a zeolite, a contaminant-absorbent, a contaminant-adsorbent, an ion-exchange material, a contaminant-reactant, a contaminant-neutralizing material, and mixtures thereof as separately applied or intermixed material, with or without contaminant-feeding microorganisms. The powdered or granular materials including filler materials, such as sand, rock and/or rip-rap may be applied as an admixture, or applied sequentially within the reactive geocomposite mat, and/or gabion cage contaminant structure. Preferably, the reactive geocomposite is flled with contaminant-reactive powdered or granular material in an amount of at least about 160.2 kg/m³ (10 lb/ft³) up to about 2402.8 kg/m³ (150 lb /ft³), preferably about 480.6 kg/m³ (30 lb/ft³) to about 1601.8 kg/m³ (100 lb/ft³), throughout the thickness, or throughout any upper central or lower portion of the thickness resulting in an article that has a water permeability of at least 1x10⁻⁶ cm/sec, preferably in the range of 10⁻⁴ to 10² cm/sec.

In terms of m²(ft²) of powdered or granular reactive material contained within the reactive geocomposite mat 11, based on surface area, some target loadings for various reactive materials (which can vary about 50% up or down) are as follows

| | REACTANT LOADING |
|---|---|
| Organoclay | 4.00 kg/m² (0.82 lb/ft²) |
| 100% Carbon | 2.59 kg/m² (0.53 lb/ft²) |
| 100% Sand | 3.03 kg/m² (0.62 lb/ft²) |
| 60% Carbon/40% Sand | 3.27 kg/m² (0.67 lb/ft²) |
| 90% Carbon/10% Sand | 2.73 kg/m² (0.56 lb/ft²) |

The above and other aspects and advantages of the contaminant-reactive gabion/geocomposite articles and their methods of manufacture will become apparent from the following detailed description of the preferred embodiments taken in conjunction with the drawings.

### BRIEF DESCRIPTION OF THE DRAWINGS

Fig. 1 is a perspective view of a gabion cage prior to connecting a reactive geocomposite mat to the gabion cage undersurface;
Fig. 2A is a perspective view of one embodiment of placing a reactive material in a geotextile that lines an inner surface of the gabion cage;
Fig. 2B is another embodiment of lining an inner bottom surface of a gabion cage with the reactive geocomposite article shown in Fig. 1, cut to the size of the gabion cage bottom wall;
Fig. 3 is a perspective view, during manufacture, of one embodiment of the manufacturing method Fig. 2A, whereby excess geotextile is folded and connected over the reactive material to confine the reactive material within the gabion cage during deployment; and
Fig. 4 is a perspective view, showing a gang of gabion cages, having a reactive geocomposite article secured thereunder, being dropped in place over waterway contaminants.

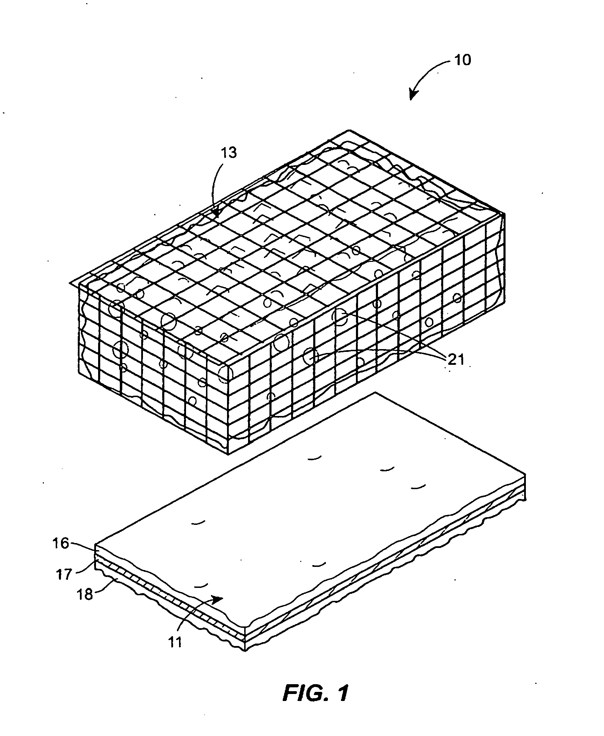

Turning now to FIG. 1, there is shown a schematic diagram for a preferred embodiment of manufacturing the reactive gabion articles 10 described herein.

As shown in Fig. 1, the preferred reactive gabion/geocomposite article 10 comprises a reactive geocomposite mat 11 disposed below a gabion cage 13. The reactive geocomposite mat 11 includes, in one embodiment, woven or non-woven liquid-permeable outer geotextile sheet material layers 16 and 18 on both major exterior surfaces to confine a reactive material 17 therebetween. The powdered or granular reactive materials 17, such as a contaminant (organic) reactant absorbent or adsorbent are confined between geotextile sheet material layers 16 and 18, or, in another embodiment, can be vibrated into a high loft geotextile, as described in this assignee's patent application US 2007/0059542 A1.

Optionally, a water-absorbent or water-swellable material, such as sodium bentonite clay and/or other sodium smectite clay, can be included (e.g., at seams) with the contaminant-reactant material(s) disposed between geotextile sheet material layers 16 and 18 or held within a high loft geotextile, so long as the geocomposite mat 11 is water-permeable. Any of these features can be used alone or together with any of the other features, shown in FIGS. 1 through 4, to provide very unique reactive gabion/geocomposite articles 10 having any number of different properties and the capability of containing the spread of contaminants.

As shown in FIGS. 1, 2A, 2B and 3, there are illustrated methods and apparatus, including a number of optional features each of which can be used alone or in combination with any of the other features, for manufacturing a product having single or plurality of different granular or powdered materials, including contaminant-reactant materials, and having a gabion cage structure 13 above or surrounding a reactive geocomposite mat 11 to provide various characteristics or properties to the finished gabion/geocomposite article 10, as will be described in more detail hereinafter.

In accordance with the embodiment shown in FIG. 1, a reactive material-containing geocomposite mat 11 is joined to a gabion cage 13 to form a reactive gabion/geocomposite article 10, in a manner such that the gabion cage 13 is deployed above the reactive geocomposite mat 11. The gabion cage 13 can be weighted with rock, rip-rap, or the like, within or above the gabion cage 13, to hold the reactive geocomposite article 10 in position if, for example, the gabion cage 13 is made from a polymeric material. Alternatively, if the gabion cage 13 is metal, it may be heavy enough to maintain its deployed position without a weighting material 21 therein or thereon.

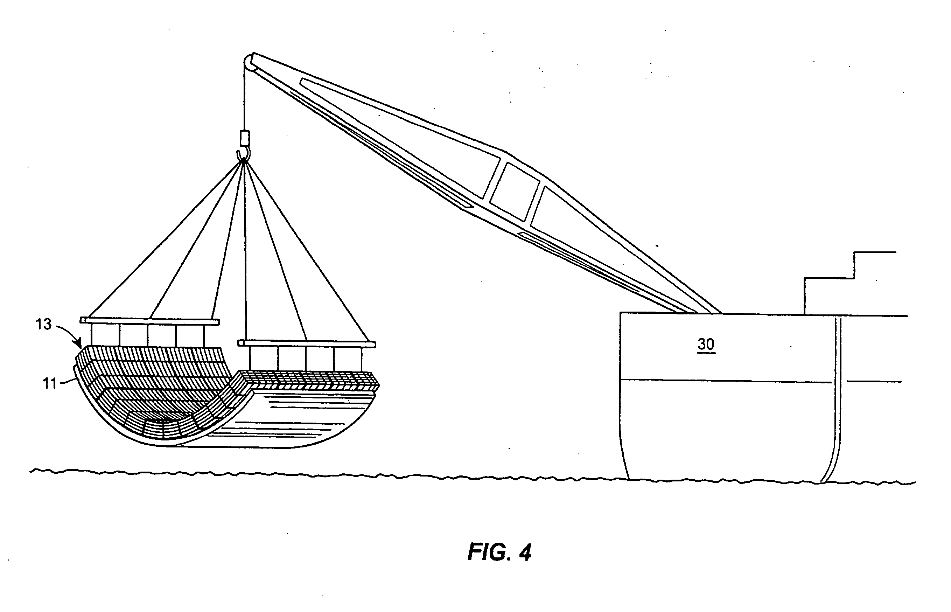

Generally, in all embodiments described herein, multiple gabion cages 13 are connected together, (called a gang of cages) as shown in Figs. 2A, 2B, and 4. When reactive geocomposite mats 11 are connected to a bottom of the gang of gabion cages, the reactive geocomposite mat 11 may be individually connected to each gabion cage 13, as shown in Fig. 1, or a larger reactive geocomposite mat 11 may be of sufficient size to cover an undersurface of the gang of gabion cages 13, as shown in Fig. 4, thereby covering the undersurface of all connected gabion cages with a single reactive geocomposite mat 11.

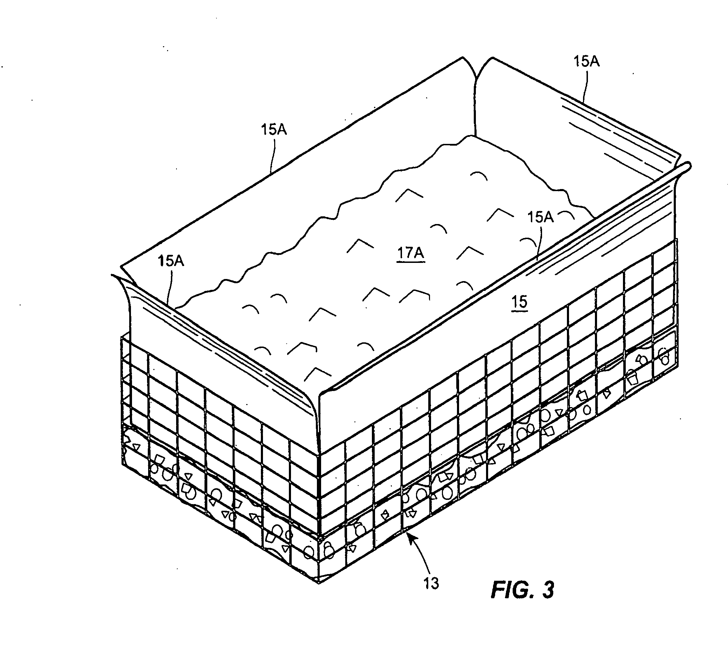

In accordance with additional important embodiments of the gabion/geocomposite articles and deployment methods described herein, as shown in Figs. 2A, 2B and 3, the reactive geocomposite is disposed inside the gabion cages 13, each cage having an optional cover grid 22. The method of disposing a reactive geocomposite article inside a gabion cage according to one embodiment of the invention as in Fig. 2A shows a reactive geocomposite, hereinafter designated by reference numeral 11A, which is formed in place within each gabion cage 13. As shown in Fig. 2A, a geotextile 15 is disposed inside a gabion basket 13 to line an upper surface of a bottom wall 19 of the gabion basket 13, as well as the side walls 20, forming an empty geotextile sack within each gabion cage 13. At least one reactive material 17A then is dropped into the geotextile sack, optionally together with additional layers of other reactive materials (or admixtures of reactive materials) and optionally admixed with, or provided as a separate layer, of weighting materials (21), such as sand, rock, rip-rap, or the like.

In accordance with a preferred method of maintaining the reactive material 17A within the geotextile sack, as shown in Fig. 3, the sack is not completely filled so that a top edge 15A of the geotextile material can be folded over an upper surface of the reactive material 17A (and over other optional materials added to the sack). The top edge 15A of the geotextile material 15 then is secured over the reactive material-containing sack, forming a sack cover, such as by using fasteners, e.g., staples, or wire or plastic clips, or by heat or ultrasonically welding the top edge 15A of the formed cover of the geotextile sack, over the material(s) added to the geotextile sack to prevent the reactive material(s) from being forced out of the gabion cage 13 by aquafers or water currents.

In accordance with the invention the gabion/geocomposite articles and deployment methods described herein, as shown in Fig. 2B, show that each gabion cage 13 is lined on an upper surface of the bottom wall 19 of the gabion cage 13 with a layer of the reactive geocomposite mat 11B. In a preferred embodiment, each reactive geocomposite mat 11B is cut to the dimensions of the upper surface of the bottom wall 19 of the gabion cages 13. A gang of gabion cages 13, each lined on an inside of its bottom wall 19, therefore, will be capable of treating contaminated water over the full bottom dimension of the gang of gabion cages 13, since reactive material 17 from adjacent geocomposite mats 11B will spill over the side wall (e.g., 20 in Fig. 2B) for treatment of any contaminated water attempting to move vertically upward around the wall 20, without traversing one of the reactive geocomposite mats 11B. The reactive geocomposite may be covered by a layer of rock, rip rap or the like 21.

Fig. 4 shows ship 30 deployment of a connected gang of weighted gabion cages 13 secured together, and having a single reactive geocomposite mat 11 secured to an undersurface of the entire gang of gabion cages.

## Claims

1. Multiple reactive, interconnected gabions/geocomposite articles (10) for treating contaminants in soil, sediment or water, comprising a water-pervious, reactive geotextile mat (11), containing a powdered or granular reactive material (17) disposed throughout the thickness or throughout an upper or lower portion of the thickness of the mat (11) within a gabion cage (13) structure, surrounding the reactive geotextile mat (11), said gabion cage (13) structure having an integral or added weighting material (21) to hold the reactive geotextile mat (11) in place on a contaminated underwater sediment or above-water soil location.

2. The multiple reactive gabion/geocomposite articles of claim 1, wherein the gabion cage (13) structure is fastened to the reactive geotextile mat (11).

3. The multiple reactive gabion/geocomposite articles of claim 1, wherein the powdered or granular material (17) is selected from group consisting of activated carbon, coke breeze, zero-valent iron, magnetite, apatite, organophilic clay, zeolite, polymeric ion exchange resins, polymeric adsorbing resins, microorganisms, and mixtures thereof.

4. The multiple reactive gabion/geocomposite articles of claim 1, wherein the water-pervious reactive geotextile mat (11) contains multiple geosynthetic sheet or fabric layers (16, 18), having the reactive material (17) contained therebetween, said layers formed from fibers selected from the group consisting of polyolefin, polyester, polyamide, and copolymers of any two or more of the foregoing.

5. The multiple reactive gabion/geocomposite articles of claim 1, wherein the water-pervious geotextile mat (11) includes the powdered or granular reactive material (17) held within a geotextile fabric (15).

6. The multiple reactive gabion/geocomposite articles of claim 5, wherein the reactive material (17) has a particle size such that at least 90% of the particles have a size in the range of 3.36 mm (6 mesh) to 0.044 mm (325 mesh).

7. The multiple reactive gabion/geocomposite articles of claim 1, wherein the gabion/ geocomposite article has 480.6 kg/m3 (30 Ib/ft3) to 1601.8 kg/m3 (100 Ib/ft3) of powdered or granular reactive material (17) contained within the reactive geocomposite article (10).

8. The multiple reactive gabion/geocomposite articles of claim 1, wherein the gabion cage (13) covers an upper major surface of the reactive geotextile mat (11) and the gabion cage (13) is fastened to a surface of the reactive geotextile mat (11).

9. A method of manufacturing multiple reactive interconnected gabions/ geocomposite articles (10) comprising:
forming a reactive geotextile mat (11) containing a reactive material (17) disposed throughout the thickness or throughout an upper or lower portion of the thickness of the mat (11), disposing the reactive geotextile mat (11) in a gabion cage (13) structure surrounding the reactive geotextile mat (11) that is essentially coextensive with a floor and side walls of the gabion cage; and interconnecting multiple reactive gabion/geocomposite articles (10).

10. The method of claim 9, wherein the reactive geocomposite article (10) is adhered to the gabion cage (13) structure.

11. The method of claim 9, wherein the reactive geotextile mat (11) containing the reactive material (17) is formed by:
providing a water-permeable geotextile sheet or fabric (15) and positioning the geotextile sheet or fabric (15) into a gabion cage (13) structure, such that the geotextile sheet or fabric (15) covers a bottom (19) and four inside side walls (20) of the gabion cage (13) structure; adding a contaminant-reactive material (17) layer into the geotextile sheet or fabric (15) ;
folding the geotextile sheet or fabric (15) over the contaminant-reactive material (17) layer such that the geotextile sheet or fabric (15) completely covers an upper surface of the contaminant reactive material layer; and
securing the geotextile sheet together over the upper surface of the contaminant-reactive material (17) to confine the contaminant-reactive material (17) within the geotextile sheet or fabric (15).

12. The method of claim 11, further comprising folding upper edges (15A) of the geotextile sheet or fabric (15) over an upper surface of the contaminant reactive material (17) layer and adhering the upper folded geotextile sheet or fabric edges (15A) together.

13. The method of claim 9, wherein the reactive material (17) is capable of sorbing, reacting with, or neutralizing a liquid-contained contaminant, and wherein the reactive geocomposite article (10) comprises a water-permeable, reactive geotextile mat (11) positioned within the gabion cage (13) structure.

14. The method of claim 13, wherein the geotextile mat (11) is sized to cover an inside bottom surface (19) of the gabion cage (13).

15. The method of claim 9 further including the step of adding a weighting material (21) above the contaminant-reactive material (17), within the gabion cage (13).

## Patentansprüche

1. Mehrere reaktive, miteinander verbundene Gabionen/Geokompositartikel (10) zur Behandlung von Kontaminanten im Boden, Sediment oder Wasser, die eine wasserdurchlässige, reaktive Geotextilmatte (11), die ein pulverisiertes oder granuläres reaktives Material (17), das durch die Dicke oder durch einen oberen oder unteren Teil der Dicke der Matte (11) angeordnet ist, enthält, innerhalb einer Gabionenkäfig (13)-Struktur, die die reaktive Geotextilmatte (11) umgibt, umfassen, wobei die Gabionenkäfig (13)-Struktur ein integrales oder hinzugefügtes Gewichtsmaterial (21) hat, um die reaktive Geotextilmatte (11) an einem verunreinigten Unterwassersediment oder einer verunreinigten Überwasserbodenstelle in Position zu halten.

2. Mehrere reaktive Gabionen/Geokompositartikel gemäß Anspruch 1, wobei die Gabionenkäfig (13)-Struktur an der reaktiven Geotextilmatte (11) befestigt ist.

3. Mehrere reaktive Gabionen/Geokompositartikel gemäß Anspruch 1, wobei das pulverisierte oder granuläre Material (17) ausgewählt ist aus der Gruppe, bestehend aus Aktivkohle, Koksgrus, nullwertigem Eisen, Magnetit, Apatit, organophilem Ton, Zeolith, polymeren Ionenaustauscherharzen, polymeren Adsorptionsharzen, Mikroorganismen und Mischungen davon.

4. Mehrere reaktive Gabionen/Geokompositartikel gemäß Anspruch 1, wobei die wasserdurchlässige reaktive Geotextilmatte (11) mehrere geosynthetische Folie- oder Gewebeschichten (16, 18), die das reaktive Material (17) dazwischen enthalten, enthält, wobei die Schichten aus Fasern, ausgewählt aus der Gruppe, bestehend aus Polyolefin, Polyester, Polyamid und Copolymeren aus zwei oder mehreren der vorherigen, gebildet sind.

5. Mehrere reaktive Gabionen/Geokompositartikel gemäß Anspruch 1, wobei die wasserdurchlässige Geotextilmatte (11) das pulverisierte oder granuläre reaktive Material (17), das innerhalb eines Geotextilgewebes (15) enthalten ist, umfasst.

6. Mehrere reaktive Gabionen/Geokompositartikel gemäß Anspruch 5, wobei das reaktive Material (17) so eine Partikelgröße hat, dass mindestens 90% der Partikel eine Größe im Bereich von 3,36 mm (6 Mesh) bis 0,044 mm (325 Mesh) haben.

7. Mehrere reaktive Gabionen/Geokompositartikel gemäß Anspruch 1, wobei die Gabione/der Geokompositartikel 480,6 kg/m³ (30 lb/ft³) bis 1601,8 kg/m³ (100 lb/ft³) an pulverisiertem oder granulärem reaktiven Material (17), das in dem reaktiven Geokompositartikel (10) enthalten ist, hat.

8. Mehrere reaktive Gabionen/Geokompositartikel gemäß Anspruch 1, wobei der Gabionenkäfig (13) eine obere Hauptoberfläche der reaktiven Geotextilmatte (11) bedeckt und der Gabionenkäfig (13) an einer Oberfläche der reaktiven Geotextilmatte (11) befestigt ist.

9. Verfahren zur Herstellung von mehreren reaktiven miteinander verbundenen Gabionen/Geokompositartikeln (10), das umfasst:
Bilden einer reaktiven Geotextilmatte (11), die ein reaktives Material (17), das durch die Dicke oder durch einen oberen oder unteren Teil der Dicke der Matte (11) angeordnet ist, enthält, Anordnen der reaktiven Geotextilmatte (11) in einer Gabionenkäfig (13)-Struktur, die die reaktive Geotextilmatte (11), die im Wesentlichen mit einem Boden und Seitenwänden des Gabionenkäfigs koexistent ist, umgibt; und miteinander Verbinden von mehreren reaktiven Gabionen/Geokompositartikeln (10).

10. Verfahren gemäß Anspruch 9, wobei der reaktive Geokompositartikel (10) an die Gabionenkäfig (13)-Struktur geklebt wird.

11. Verfahren gemäß Anspruch 9, wobei die reaktive Geotextilmatte (11), die das reaktive Material (17) enthält, gebildet wird durch:
Bereitstellen einer/eines wasserdurchlässigen Geotextilfolie oder -gewebes (15) und Positionieren der/des Geotextilfolie oder -gewebes (15) in eine Gabionenkäfig (13)-Struktur, so dass die/das Geotextilfolie oder -gewebe (15) einen Boden (19) und vier innere Seitenwände (20) der Gabionenkäfig (13)-Struktur bedeckt; Zugeben einer Schicht eines kontaminantenreaktiven Materials (17) in die/das Geotextilfolie oder -gewebe (15);
Falten der/des Geotextilfolie oder -gewebes (15) über die Schicht des kontaminantenreaktiven Materials (17), so dass die/das Geotextilfolie oder -gewebe (15) eine obere Oberfläche der Schicht des kontaminantenreaktiven Materials vollständig bedeckt; und
Befestigen der Geotextilfolie zusammen über der oberen Oberfläche des kontaminantenreaktiven Materials (17), um das kontaminantenreaktive Material (17) innerhalb der/des Geotextilfolie oder -gewebes (15) zu begrenzen.

12. Verfahren gemäß Anspruch 11, das weiterhin Falten der oberen Kanten (15A) der/des Geotextilfolie oder -gewebes (15) über eine obere Oberfläche der Schicht des kontaminantenreaktiven Materials (17) und Zusammenkleben der oberen gefalteten Kanten (15A) der/des Geotextilfolie oder -gewebes umfasst.

13. Verfahren gemäß Anspruch 9, wobei das reaktive Material (17) in der Lage ist, einen in Flüssigkeit enthaltenen Kontaminanten zu sorbieren, mit diesem zu reagieren oder diesen zu neutralisieren, und wobei der reaktive Geokompositartikel (10) eine wasserdurchlässige reaktive Geotextilmatte (11), die innerhalb der Gabionenkäfig (13)-Struktur positioniert ist, umfasst.

14. Verfahren gemäß Anspruch 13, wobei die Geotextilmatte (11) so eine Größe hat, dass sie eine innere Bodenoberfläche (19) des Gabionenkäfigs (13) bedeckt.

15. Verfahren gemäß Anspruch 9, das weiterhin den Schritt des Hinzufügens eines Gewichtsmaterials (21) über das kontaminantenreaktive Material (17) innerhalb des Gabionenkäfigs (13) umfasst.

## Revendications

1. Articles multiples de gabion/géocomposite réactif interconnectés (10) pour traiter les contaminants dans le sol, les sédiments ou l'eau, comprenant un tapis géotextile (11) réactif, perméable à l'eau contenant un matériau réactif en poudre ou granulaire (17) disposé sur toute l'épaisseur ou sur toute une partie supérieure ou inférieure de l'épaisseur du tapis (11) à l'intérieur d'une structure de cage de gabion (13), entourant le tapis géotextile réactif (11), ladite structure de cage de gabion (13) ayant un matériau de charge solidaire ou ajouté (21) pour maintenir le tapis géotextile (11) en place sur un sédiment sous-marin contaminé ou un emplacement de sol au-dessus de l'eau.

2. Articles multiples de gabion/géocomposite réactif selon la revendication 1, dans lesquels la structure de cage de gabion (13) est fixée sur le tapis géotextile réactif (11).

3. Articles multiples de gabion/géocomposite réactif selon la revendication 1, dans lesquels le matériau en poudre ou granulaire (17) est choisi dans le groupe comprenant le charbon actif, le coke broyé, le fer à valence zéro, la magnétite, l'apatite, l'argile organophilique, la zéolite, les résines polymères échangeuses d'ions, les résines polymères absorbantes, les microorganismes et leurs mélanges.

4. Articles multiples de gabion/géocomposite réactif selon la revendication 1, dans lesquels le tapis géotextile réactif perméable à l'eau (11) contient plusieurs couches de tissu ou de feuille géosynthétique (16, 18) contenant le matériau réactif (17) entre elles, lesdites couches étant formées à partir de fibres choisies dans le groupe comprenant la polyoléfine, le polyester, le polyamide et les copolymères de deux ou de plusieurs éléments précédents.

5. Articles multiples de gabion/géocomposite réactif selon la revendication 1, dans lesquels le tapis géotextile perméable à l'eau (11) comprend un matériau en poudre ou granulaire réactif (17) maintenu à l'intérieur d'un tissu géotextile (15).

6. Articles multiples de gabion/géocomposite réactif selon la revendication 5, dans lesquels le matériau réactif a une taille particulaire de sorte qu'au moins 90% des particules ont une taille dans la plage de 3,36 mm (6 mesh) à 0,044 mm (325 mesh).

7. Articles multiples de gabion/géocomposite réactif selon la revendication 1, dans lesquels l'article de gabion/géocomposite a de 480,6 kg/m³ (30 lb/ft³) à 1601,8 kg/m³ (100 lb/ft³) de matériau réactif en poudre ou granulaire (17) contenu à l'intérieur de l'article géocomposite réactif (10).

8. Articles multiples de gabion/géocomposite réactif selon la revendication 1, dans lesquels la cage de gabion (13) recouvre une surface majeure supérieure du tapis géotextile réactif (11) et la cage de gabion (13) est fixée sur une surface du tapis géotextile réactif (11).

9. Procédé pour fabriquer des articles multiples de gabion/géocomposite réactif interconnectés (10) comprenant les étapes consistant à :
former un tapis géotextile réactif (11) contenant un matériau réactif (17) disposé sur toute l'épaisseur ou sur toute une partie supérieure ou inférieure de l'épaisseur du tapis (11), disposer le tapis géotextile réactif (11) dans une structure de cage de gabion (13) entourant le tapis géotextile réactif (11) qui est essentiellement coextensif avec un sol et des parois latérales de la cage de gabion ; et interconnecter des articles multiples de gabion/géocomposite réactif (10).

10. Procédé selon la revendication 9, dans lequel l'article géocomposite réactif (10) adhère à la structure de cage de gabion (13).

11. Procédé selon la revendication 9, dans lequel le tapis géotextile réactif (11) contenant le matériau réactif (17) est formé par les étapes consistant à :
prévoir une feuille ou tissu géotextile perméable à l'eau (15) et positionner la feuille ou tissu géotextile (15) dans une structure de cage de gabion (13), de sorte que la feuille ou tissu géotextile (15) recouvre un fond (19) et quatre parois latérales intérieures (20) de la structure de cage de gabion (13) ; ajouter une couche de matériau réactif au contaminant (17) dans la feuille ou tissu géotextile (15) ;
plier la feuille ou tissu géotextile (15) sur la couche de matériau réactif au contaminant (17) de sorte que la feuille ou tissu géotextile (15) recouvre complètement une surface supérieure de la couche de matériau réactif au contaminant ; et
fixer la feuille géotextile sur la surface supérieure du matériau réactif au contaminant (17) afin de confiner le matériau réactif au contaminant (17) à l'intérieur de la feuille ou tissu géotextile (15).

12. Procédé selon la revendication 11, comprenant en outre l'étape consistant à plier des bords supérieurs (15A) de la feuille ou tissu géotextile (15) sur une surface supérieure de la couche de matériau réactif au contaminant (17) et faire adhérer les bords de la feuille ou tissu géotextile plié(e) supérieur(e) (15A) ensemble.

13. Procédé selon la revendication 9, dans lequel le matériau réactif (17) est capable d'absorber, de réagir avec ou de neutraliser un contaminant contenu dans le liquide, et dans lequel :
l'article géocomposite réactif (10) comprend un tapis géotextile réactif perméable à l'eau (11) positionné à l'intérieur de la structure de cage de gabion (13).

14. Procédé selon la revendication 13, dans lequel le tapis géotextile (11) est dimensionné pour recouvrir une surface inférieure intérieure (19) de la cage de gabion (13).

15. Procédé selon la revendication 9, comprenant en outre l'étape consistant à ajouter un matériau de charge (21) au-dessus du matériau réactif au contaminant (17), à l'intérieur de la cage de gabion (13).
